# EUROPÄISCHE PATENTANMELDUNG

(11) **EP 1 117 235 A2**
(43) Veröffentlichungstag der Anmeldung: **18.07.2001**
(21) Anmeldenummer: 00440329.1
(22) Anmeldetag: 15.12.2000
(51) Int. Cl.: H04M 3/42, H04M 7/00

(54) **Verfahren, Vermittlungsstelle, Diensterechner, Programm-Modul und Schnittstelleneinrichtung zur Übermittlung von Telekommunikationsdienst-Daten zwischen einer Vermittlungsstelle und einem Diensterechner**

(30) Priorität: 15.01.2000 DE 10001417
(71) Anmelder: ALCATEL, 75008 Paris (FR)
(72) Erfinder: Piepkorn, Peter, 71732 Tamm (DE); Hopfmüller, Heinrich, 71282 Hemmingen (DE); Glasner-Schapeler, Ingrid, 71229 Leonberg (DE); Milbredt, Thomas, 71229 Leonberg (DE)
(74) Vertreter: Brose, Gerhard

(57) **Zusammenfassung**

Die Erfindung betrifft ein Verfahren zur Übermittlung von Telekommunikationsdienst-Daten zwischen einer Vermittlungsstelle (SW1) und einem Diensterechner (GPTM) sowie weiterhin eine Vermittlungsstelle (SW1), einen Diensterechner (GPTM), ein Programm-Modul und eine Schnittstelleneinrichtung (LPTM) hierfür. Dabei kann ein Teilnehmer (SUBA) mit einem Endgerät (TERA) über das Internet auf eine Benutzerschnittstelle (IGP) des Diensterechners (GPTM) zugreifen und über die Benutzerschnittstelle (IGP) seine Telekommunikationsdienst-Daten manipulieren. Mit Hilfe der Telekommunikationsdienst-Daten kann die Vermittlungsstelle (SW1) Telekommunikationsdienste erbringen. Dazu wird vorgeschlagen, dass eine Verbindung (VGP) zwischen der Vermittlungsstelle (SW1) und dem Diensterechner (GPTM) aufgebaut wird, auf der dann Daten zur Erbringung von Telekommunikationsdiensten für den Teilnehmer (SUBA) in Form von Objekten, insbesondere von CORBA-Objekten oder von DCOM-Objekten, übermittelt werden.

## Beschreibung

Die vorliegende Erfindung betrifft ein Verfahren gemäß dem Oberbegriff des Anspruchs 1, einen Diensterechner gemäß dem Oberbegriff des Anspruchs 7 hierfür, ein Programm-Modul für einen Diensterechner gemäß dem Oberbegriff des Anspruchs 8 hierfür, eine Schnittstelleneinrichtung für eine Vermittlungsstelle gemäß dem Oberbegriff des Anspruchs 9 hierfür und eine Vermittlungsstelle gemäß dem Oberbegriff des Anspruchs 10 hierfür.

Mit fortschreitender Entwicklung bieten Telekommunikationsnetze ihren Teilnehmern immer Weitergehende und komfortablere Telekommunikationsdienste an. Solche Komfort-Telekommunikationsdienste sind z.B. verschiedene Formen der Rufumleitung, jeweils unter bestimmten Bedingungen. So wird beispielsweise beim sogenannten Call Forwarding Busy (CFB) ein Ruf nur dann an eine andere Rufnummer weitergeleitet, wenn die ursprünglich gewählte Rufnummer gerade besetzt ist. Bei einem sogenannten Call Forwarding Unconditional (CFU) wird ein Ruf ohne eine Vorbedingung an eine andere Rufnummer weitergeleitet. Solche-teilweise standardisierte - Dienste sind insbesondere in ISDN-Netzen (Integrated Services Digital Network), zunehmend aber auch für Teilnehmer mit analogem Anschluss an ein öffentliches Telefonnetzwerk gebräuchlich. Die Daten, die für einen solchen Dienst erforderlich sind, z.B. eine Rufnummer an die weitergeleitet werden soll, werden im Allgemeinen dezentral jeweils in der Ortsvermittlungsstelle verwaltet, über die der den Dienst in Anspruch nehmende Teilnehmer mit dem Telekommunikationsnetz verbunden ist. So kann ein Ruf zunächst an diese Ortsvermittlungsstelle geleitet werden, die dann anhand ihrer lokal gespeicherten Daten den Ruf je nach Einstellung an den Teilnehmeranschluss weiterleiten oder an eine vorbestimmte Rufnummer umleiten kann.

Die Daten für die letztgenannten Dienste können von dem Teilnehmer selbst geändert werden. Der Teilnehmer wählt dann an seinem Telefon eine Zugangskennziffer, mit der er Zugriff zu seinen persönlichen Daten bekommt, und gibt gegebenenfalls Datenänderungen an, schaltet also beispielsweise eine Rufumleitung aktiv oder nimmt sie außer Betrieb. Der Komfort bei der Datenänderung und der Umfang der Datenänderungsmöglichkeiten sind durch die begrenzten Bedienmöglichkeiten an einem üblichen Telefon, nämlich Spracheingabe, Sprachausgabe und Eingabe über Tastatur stark eingeschränkt. Eine Konfiguration komplizierterer Dienste ist über ein übliches Telefon nahezu unmöglich. In der deutschen Patentanmeldung DE198 10 869.9 wird daher ein Verfahren beschrieben, mit dem ein Teilnehmer über ein Datenendgerät, insbesondere einen Personal Computer, Telekommunikationsdienste für sich buchen und konfigurieren kann, deren Daten im Wesentlichen in einer Ortsvermittlungsstelle abgelegt sind, welche seinen Teilnehmeranschluss bedient.

In einer der in DE198 10 869.9 beschriebenen Lösungsvarianten erhält der Teilnehmer über das Internet direkten Zugang zu der Ortsvermittlungsstelle, in einer alternativen Lösungsvariante indirekt über einen der Ortsvermittlungsstelle vorgeschalteten Diensterechner. Dabei können die Ortsvermittlungsstelle und der Diensterechner einerseits über ein proprietäres, eigens für die Kommunikation zwischen der Ortsvermittlungsstelle und dem Diensterechner definiertes Protokoll, Telekommunikationsdienst-Daten austauschen. Andrerseits können die Ortsvermittlungsstelle und der Diensterechner aber auch beispielsweise über eine in Telefonnetzen übliche Schnittstelle miteinander kommunizieren, so z.B. über eine Q3-Schnittstelle gemäß den Spezifikationen der ITU (International Telecommunications Union). Eine proprietäres Protokoll ist zum einen umständlich zu definieren und kann zum andern auch nur von einer speziell an das proprietäre Protokoll angepassten Ortsvermittlungsstelle sowie dem dazugehörigen Diensterechner verstanden werden. Eine Anbindung unterschiedlicher Vermittlungsstellen, insbesondere von unterschiedlichen Herstellern gelieferter Vermittlungsstellen, an einen gemeinsamen Diensterechner ist aber nahezu unmöglich, da nicht nur der Diensterechner, sondern auch jede der Vermittlungsstellen mit einem Schnittstellenmodul für das proprietäre Protokoll ausgerüstet werden müsste. Eine Kommunikation über die genormte Q3-Schnittstelle hingegen, erlaubt nur sehr eingeschränkte Konfigurationsmöglichkeiten für Telekommunikationsdienste, da die genormte Q3-Schnittstelle speziell für eine Kommunikation zwischen einem sogenannten TMN-System (TMN = Telecommunications Network Management) und den durch das TMN-System zu steuernden Vermittlungsstellen ausgelegt ist. Über die Q3-Schnittstelle lassen sich zwar Vermittlungsstellen grundsätzlich steuern und überwachen. Für das Einrichten von neuen, insbesondere von noch nicht standardisierten Telekommunikationsdiensten oder gar für ein interaktives Erbringen von Telekommunikationsdiensten durch eine Vermittlungsstelle und einen Diensterechner ist die Q3-Schnittstelle jedoch nicht geeignet.

Es ist daher Aufgabe der Erfindung, eine leistungsfähige und flexible Kommunikation zwischen einer Vermittlungsstelle und einem Diensterechner zu ermöglichen, über den ein Teilnehmer für ihn durch die Vermittlungsstelle zu erbringende Telekommunikationsdienst-Daten über das Internet mit Hilfe eines Datenendgerätes manipulieren kann.

Diese Aufgabe wird durch Verfahren gemäß der technischen Lehre des Anspruchs 1, einen Diensterechner gemäß der technischen Lehre des Anspruchs 7, ein Programm-Modul für einen Diensterechner gemäß der technischen Lehre des Anspruchs 8, Schnittstelleneinrichtung für eine Vermittlungsstelle gemäß der technischen Lehre des Anspruchs 9 sowie eine Vermittlungsstelle gemäß der technischen Lehre des Anspruchs 10 gelöst. Weitere vorteilhafte Wirkungen der Erfindung ergeben sich aus den abhängigen Ansprüchen und der Beschreibung.

Der Erfindung liegt dabei der Gedanke zugrunde, dass eine Vermittlungsstelle und ein Diensterechner eine Verbindung aufbauen, über die Daten zur Erbringung von Telekommunikationsdiensten in Form von Objekten übermittelt werden. Der Diensterechner bietet dabei einem Teilnehmer eine Benutzerschnittstelle zur Manipulation seiner Telekommunikationsdienst-Daten mit einem Datenendgerät über das Internet an. Die Vermittlungsstelle erbringt Telekommunikationsdienste mit Hilfe der Telekommunikationsdienst-Daten oder aus diesen durch den Diensterechner erzeugten Daten, die auf der Verbindung zwischen der Vermittlungsstelle und dem Diensterechner in Form von Objekten übermittelt werden. Durch die Übermittlung der Daten in Objekten, wird dem jeweiligen Kommunikationspartner ein genau definierter Funktionsumfang zugänglich gemacht; ein fehlerhafter oder nicht erlaubter Zugriff auf Telekommunikationsdienst-Daten wird verhindert.

Bei den in Form von Objekten übermittelten Telekommunikationsdienst-Daten kann es sich einerseits um Konfigurationseinstellungen handeln, mit denen festgelegt ist, welche Telekommunikationsdienste und in welcher Ausgestaltung die Vermittlungsstelle Telekommunikationsdienste für den Teilnehmer erbringen soll. Die Kommunikation über Objekte eröffnet jedoch auch die Möglichkeit, dass der Diensterechner und die Vermittlungsstelle solche Daten übermitteln, mit denen die Vermittlungsstelle und der Diensterechner interaktiv Telekommunikationsdienste erbringen können.

Die Objekte für die Kommunikation zwischen der Vermittlungsstelle und dem Diensterechner können einerseits nach eigens definierten Spezifikationen gestaltet werden oder aber in einer vorteilhaften Variante der Erfindung sogenannte Object-Request-Broker-Objekte sein, z.B. gemäß der CORBA - Spezifikation (CORBA = Common Object Request Broker Architecture) der OMG (Object Management Group) oder der DCOM-Spezifikation der Firma Microsoft. Bei Einhaltung solcher gängigen und offenen Object-Request-Broker-Spezifikationen ist es leicht möglich, an einen Diensterechner verschiedenartige Vermittlungsstellen - auch solche von verschiedenen Herstellern - anzukoppeln.

Zwar kann eine Schnittstelle zur Objekt-Kommunikation mit dem Diensterechner ein integraler Bestandteil der Vermittlungsstelle sein, ein weiterer Vorteil ergibt sich jedoch, wenn für die Verbindung mit dem Diensterechner ein Objektschnittstellenmodul eingesetzt wird, das einem Diensterbringungsmodul der Vermittlungsstelle vorgeschaltet ist, das ohnehin bereits in der Vermittlungsstelle zur Erbringung von Telekommunikationsdiensten vorhanden ist. Durch das modulare Hinzufügen des Objektschnittstellenmoduls können die Konfigurationsdaten des Diensterbringungsmoduls zumindest in Teilen auch alternativ über eine Telefonverbindung von dem Teilnehmer manipuliert werden.

Über die Objektschnittstelle des Diensterechners können auch mehrere Vermittlungsstellen mit dem Diensterechner kommunizieren. Eine tatsächliche räumliche Anordnung der Vermittlungsstellen oder deren physikalische Adressen muss der Diensterechner jedoch nicht unbedingt kennen. Der Diensterechner kann nämlich in einer weiteren, durch die Kommunikation mit Objekten eröffneten Variante der Erfindung, bei einem sogenannten Nameserver anhand einer logischen Adresse der jeweiligen Vermittlungsstelle deren jeweilige Objektreferenz abfragen. Die Objektreferenz enthält dann beispielsweise die jeweilige physikalische Adresse, z.B. eine Internet Adresse der Vermittlungsstelle, über die der Diensterechner Objekte an die Vermittlungsstelle adressieren kann. Eine Zuordnung einer Vermittlungsstelle zu mehreren Diensterechnern ist ebenso möglich. Durch die Kommunikation mittels Objektreferenzen wird eine sehr hohe Stufe der Abstraktion erreicht, was nicht nur die Erstellung von Programmen zur Erbringung und Konfiguration von Telekommunikationsdiensten erleichtert, sondern auch die Wartung und Pflege der Systeme, also der erfindungsgemäßen Vermittlungsstellen und dem oder den erfindungsgemäßen Diensterechnern im Betrieb.

Im folgenden werden die Erfindung und ihre Vorteile anhand von Ausführungsbeispielen unter Zuhilfenahme der Zeichnungen dargestellt.
- Figur 1: zeigt eine Anordnung zur Ausführung des erfindungsgemäßen Verfahrens mit einem Datenendgerät TERA, einer erfindungsgemäßen Vermittlungsstelle SW1 sowie einem erfindungsgemäßen Diensterechner GPTM.
- Figur 2: zeigt eine bevorzugte Weiterbildung der Anordnung aus Figur 1 zur Ausführung des erfindungsgemäßen Verfahrens mit dem Datenendgerät TERA, erfindungsgemäßen Vermittlungsstellen SW1, und SW2 und dem Diensterechner GPTM.
- Figur 3: zeigt ein Ablaufdiagramm mit wesentlichen Schritten des erfindungsgemäßen Verfahrens.
- Figur 4: zeigt ein Ablaufdiagramm einer Kommunikation zwischen der Vermittlungsstelle SW1 und dem Diensterechner GPTM aus Figur 1.

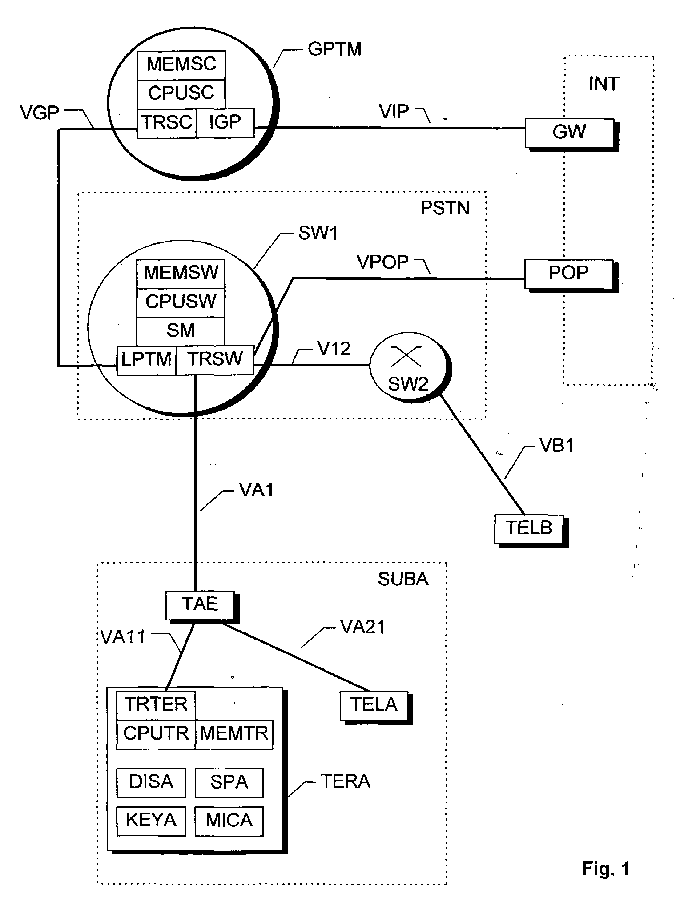

In Figur 1 ist eine beispielhafte, sehr schematische Anordnung dargestellt, mit der die Erfindung ausgeführt werden kann. Figur 1 zeigt jeweils angedeutet durch einen punktierten Kasten ein Telekommunikationsnetz PSTN, das Internet INT sowie einen Teilnehmer SUBA. Der Teilnehmer SUBA verfügt über ein erfindungsgemäßes Datenendgerät TERA sowie über ein weiteres Endgerät TELA, bei dem es sich beispielsweise um ein Festnetz-Telefon oder Mobilfunk-Telefon handeln kann. Das Datenendgerät TERA ist in dem Beispiel von Figur 1 ein Festnetz-Telefon und über eine Anschlussleitung VA11 mit einer Teilnehmeranschlussbuchse TAE verbunden. Das Endgerät TELA ist über eine alternative Anschlussleitung VA21 mit der Teilnehmeranschlussbuchse TAE verbunden. Die Teilnehmeranschlussbuchse TAE terminiert eine Teilnehmeranschlussleitung VA1, die zu der Vermittlungsstelle SW1 führt.

Bei dem Datenendgerät TERA handelt es sich beispielsweise um einen Personalcomputer. Es kann sich bei dem Datenendgerät TERA jedoch auch um ein Mobilfunk-Endgerät oder um ein Festnetz-Telefon handeln, mit denen jeweils Zugang zum Internet möglich ist. Das Datenendgerät TERA weist ein Verbindungsmittel TRTER auf, bei dem es sich beispielsweise um ein Modem oder um einen ISDN-Adapter handelt. Mit dem Verbindungsmittel TRTER kann das Datenendgerät TERA über das Telekommunikationsnetz PSTN eine Verbindung zum Internet INT aufbauen. Weiterhin weist das Datenendgerät TERA ein Steuermittel CPUTR sowie ein Speichermittel MEMTR auf. Das Steuermittel CPUTR ist beispielsweise ein Prozessor mit dem Programm-Code ausgeführt werden kann, der in dem Speichermittel MEMTR gespeichert ist. Bei dem Speichermittel MEMTR handelt es sich z.B. um eine Festplatte oder um RAM-Bausteine. Weiterhin weist das Datenendgerät TERA ein Anzeigemittel DISA sowie ein Eingabemittel KEYA auf. Das Anzeigemittel DISA ist beispielsweise ein Computermonitor oder ein LCD-Display (Liquid Cristal Display). Das Eingabemittel KEYA kann eine Tastatur oder eine Maus sein. Weiterhin weist das Datenendgerät TERA einen Lautsprecher SPA sowie ein Mikrofon MICA auf, mit denen Sprachaus- bzw. Spracheingabe möglich sind. Es ist auch möglich, dass das Datenendgerät TERA ein Kombinationsgerät ist, das auch die Funktionen des Endgerätes TELA, also eines Telefonapparates leisten kann.

Von dem Telekommunikationsnetz PSTN, das ein analoges Telekommunikationsnetz, ein ISDN-Telekommunikationsnetz (Integrated Services Digital Network) oder auch ein Mobilfunk-Netzwerk sein kann, sind stellvertretend für weitere, in Figur 1 nicht gezeigte Einrichtungen, die erfindungsgemäße Vermittlungsstelle SW1 und eine Vermittlungsstelle SW2 gezeigt. Die Vermittlungsstellen SW1 und SW2 sind über eine Verbindungsleitung V12 miteinander verbunden. Bei der Verbindungsleitung V12 kann es sich um ein Kanalbündel zwischen den beiden Vermittlungsstellen handeln. Es ist aber auch möglich, dass die Verbindung V12 über weitere, in Figur 1 nicht dargestellte Vermittlungsstellen des Telekommunikationsnetzes PSTN führt.

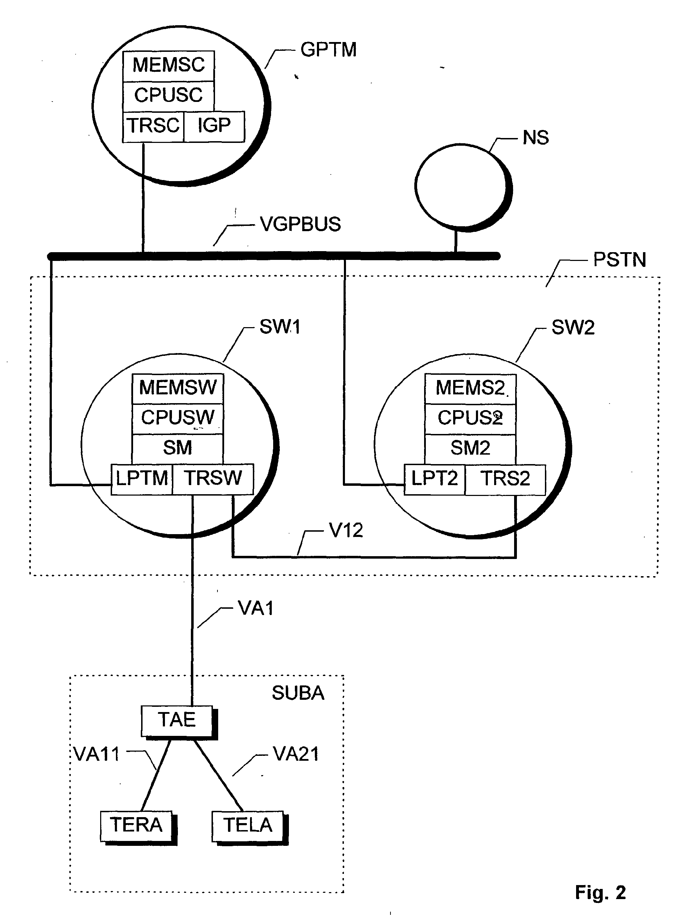

Von der Vermittlungsstelle SW1 sind beispielhaft einige wesentliche Komponenten gezeigt, nämlich, eine Schnittstelleneinrichtung LPTM, ein Diensterbringungsmittel SM, ein Verbindungsmittel TRSW sowie ein Steuermittel CPUSW und ein Speichermittel MEMSW, die durch in Figur 1 nicht dargestellte Verbindungen untereinander verbunden sind. Mit dem Verbindungsmittel TRSW kann die Vermittlungsstelle SW1 Daten- und Sprachverbindungen zu Teilnehmern oder anderen Vermittlungsstellen aufbauen. Die Diensterbringungsmittel SM können für die an die Vermittlungsstelle SW1 angeschlossenen Teilnehmer Telekommunikationsdienste erbringen, beispielsweise eine Rufumleitung steuern. Die Funktionen des Diensterbringungsmittels SM kann der Teilnehmer SUBA beispielsweise dadurch beeinflussen, dass er mit dem Endgerät TELA eine Verbindung zu dem Verbindungsmittel TRSW aufbaut. Über diese Verbindung kann der Teilnehmer SUBA dann durch Eingabe von Kennziffern an einem in Figur 1 nicht dargestellten Tastenfeld des Endgeräts TELA Befehle zur Änderung von Konfigurationseinstellungen an das Diensterbringungsmittel SM senden. Bei dem Steuermittel CPUSW handelt es sich um einen Prozessor oder um eine Gruppe von Prozessoren, die Befehle ausführen können, die in dem Speichermittel MEMSW gespeichert sind. Das Steuermittel CPUSW steuert die Funktionen der Vermittlungsstelle SW1 und nimmt dabei beispielsweise auf die Funktionen des Verbindungsmittels TRSW Einfluss. Weiterhin kann die Vermittlungsstelle SW1 weitere Baugruppen aufweisen, z.B. ein Koppelnetzwerk oder eine Schnittstelle zu einem Network Management System. Die Vermittlungsstelle SW2 kann, wie in Figur 2 noch deutlich wird, intern ebenfalls vergleichbar ausgestattet sein, wie die Vermittlungsstelle SW1. Die Vermittlungsstelle SW2 kann jedoch auch eine konventionelle, bekannte Vermittlungsstelle sein. Die Vermittlungsstelle SW1 kann die Funktionen einer Ortsvermittlungsstelle übernehmen. Es ist aber auch möglich, dass die Vermittlungsstelle SW1 zentrale Funktionen für nachgeschaltete, in Figur 1 nicht dargestellte Vermittlungsstellen übernimmt, die z.B. auf der Verbindung V12 liegen können oder dass die Teilnehmeranschlussleitung VA1 an eine der Vermittlungsstelle SW1 vorgelagerte Vermittlungsstelle oder Vorfeldeinrichtung angeschlossen ist.

Ein Diensterechner GPTM ist über ein Verbindungsmittel TRSC und eine Verbindung VGP mit der Vermittlungsstelle SW1 verbunden. Der Diensterechner GPTM weist ein Steuermittel CPUSC und Speichermittel MEMSC auf. Mit einem Verbindungsmittel IGP kann der Diensterechner GPTM eine Verbindung VIP zum Internet aufbauen. Bei dem Diensterechner GPTM kann es sich um einen Rechner handeln, der durch ein UNIX-Betriebssystem oder ein Windows-NT-Betriebssystem betrieben wird. Das Steuermittel CPUSC ist ein Prozessor oder ein Cluster von Prozessoren, das die Befehle des Betriebssystems, das in dem Speicher MEMSC gespeichert ist, ausführt. Weiterhin können in dem Speichermittel MEMSC, das beispielsweise eine Festplatte oder RAM-Bausteine umfasst, Programmcode-Sequenzen gespeichert sein, die von dem Steuermittel CPUSC ausgeführt werden. Das Steuermittel CPUSC beeinflusst auch die Funktionen des Verbindungsmittels TRSC, mit dem z.B. die erwähnte Verbindung VGP aufgebaut werden kann. Der Diensterechner GPTM weist auch weitere, in Figur 1 nicht dargestellte Baugruppen auf, z.B. einen Monitor, eine Tastatur und eine Maus. Der Diensterechner GPTM kann auch weitere Vermittlungsstellen ausser der Vermittlungsstelle SW1 bedienen.

Von dem Internet INT sind lediglich die Zugangseinrichtung POP sowie ein Gateway GW dargestellt. Die weitere Infrastruktur des Internets INT, beispielsweise Router, Gateways und dergleichen sind in Figur 1 aus Gründen der Einfachheit nicht dargestellt.

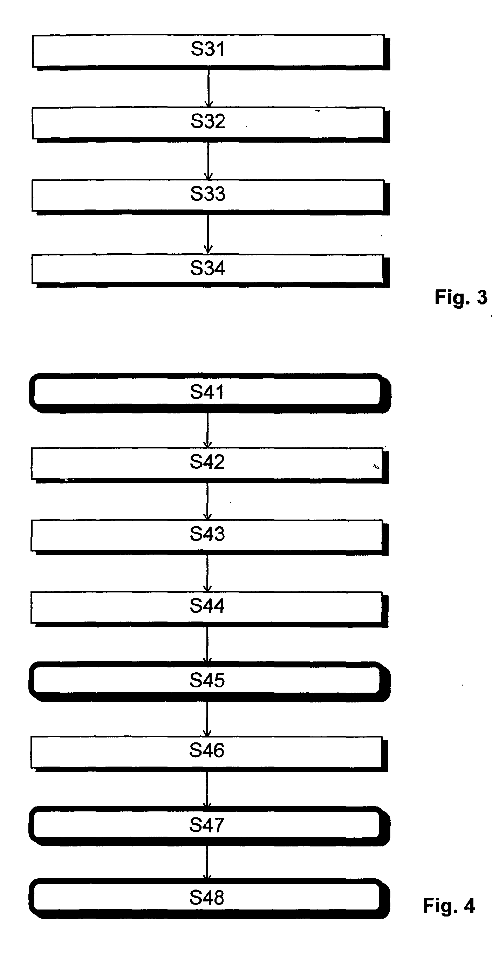

Im folgenden wird nun anhand der Anordnung aus Figur 1 unter Zuhilfenahme des Ablaufdiagrammes aus Figur 3 ein typischer Verfahrensablauf dargestellt.

In einem Schritt S31 baut der Teilnehmer SUBA mit seinem Datenendgerät TERA eine Verbindung zu der Zugangsrichtung POP des Internets INT auf. Dazu gibt der Teilnehmer SUBA an dem Eingabemittel KEYA die Teilnehmernummer der Zugangseinrichtung POP ein. Über die Anschlussleitung VA11 und die Teilnehmeranschlussleitung VA1 baut das Datenendgerät TERA daraufhin eine Verbindung zu der Vermittlungsstelle SW1 auf. Mit Hilfe der Teilnehmernummer der Zugangseinrichtung POP vervollständigt die Vermittlungsstelle SW1 dann die gewünschte Verbindung des Teilnehmers SUBA und baut dazu die weitere Verbindung VPOP zu der Zugangseinrichtung POP auf. Über das Internet INT kann der Teilnehmer mit einer von dem Diensterechner GPTM zur Verfügung gestellten Benutzerschnittstelle kommunizieren. Dabei werden in einem Schritt S32 Telekommunikationsdienst-Daten von dem Datenendgerät TERA über ein Gateway GW und über eine Verbindung VIP an den Diensterechner GPTM und umgekehrt übertragen. Mit Hilfe der Daten können Einstellungen von Telekommunikationsdiensten ausgelesen und verändert werden. Dabei werden z.B. zusätzliche Telekommunikationsdienste angefordert oder bei bereits gebuchten Telekommunikationsdiensten die Betriebsparameter verändert. So ist es z.B. möglich, verschiedene Formen der Rufumleitung zu buchen, wie das eingangs erwähnte Call Forwarding Busy (CFB) oder das Call Forwarding Unconditional (CFU). Es können auch neuartige, weiter unten näher erläuterte Dienste eingerichtet werden, die von dem Diensterechner GPTM interaktiv mit der Vermittlungsstelle SW1 erbracht werden. Damit der Teilnehmer SUBA nur auf Telekommunikationsdienst-Daten zugreifen kann, wenn er dazu berechtigt ist, kann dem Diensterechner GPTM auch ein in Figur 1 nicht dargestellter sogenannter "Firewall" vorangeschaltet sein, der verhindert, dass der Teilnehmer SUBA für ihn gesperrte Daten einsieht oder manipuliert. Weiterhin kann der Diensterechner GPTM eine Blockierungsfunktion aufweisen, mit der der Diensterechner GPTM verhindert, dass der Teilnehmer SUBA nicht nur mit dem Datenendgerät TERA, sondern konkurrierend zeitgleich auch mit einem weiteren, in Figur 1 nicht dargestellten Datenendgerät auf seine Telekommunikationsdienst-Daten zugreift.

Die Benutzerschnittstelle wird durch ein Programm angeboten, das in dem Speichermittel MEMSC abgelegt ist und durch das Steuermittel CPUSC ausgeführt wird. Die Benutzerschnittstelle sendet dem Datenendgerät TERA Daten beispielsweise in der Seiten-Beschreibungssprache HyperText Markup Language (HTML), der erweiterten Seiten-Beschreibungssprache XML (Extensible Markup Language) oder auch in der Sprache JAVA, die von dem Datenendgerät TERA mittels eines Auswerteprogrammes, eines sogenannten Browsers gelesen und interpretiert werden. Der Programmcode des Browsers ist in dem Speichermittel MEMTR abgelegt und wird durch das Steuermittel CPUTR ausgeführt. Der Teilnehmer SUBA kann die durch den Browser angezeigten Daten modifizieren. Die modifizierten Daten sendet das Datenendgerät TERA an den Diensterechner GPTM zurück.

In einem Schritt S33 baut der Diensterechner GPTM eine Verbindung VGP zu der Vermittlungsstelle SW1 auf. Die Verbindung VGP kann beispielsweise über ein sogenanntes Virtual Private Network (VPN) führen, das ein auf dem Telekommunikationsnetz PSTN oder dem Internet INT aufgebautes privates logisches Netzwerk sein kann. Die Verbindung VGP kann jedoch statt über das Telekommunikationsnetz PSTN auch über das Internet oder aus Sicherheitsgründen über ein separates Local Area Network (LAN) führen. Auf der Verbindung VGP übermittelt der Diensterechner GPTM dann in einem Schritt S34 die von dem Datenendgerät TERA modifizierten Telekommunikationsdienst-Daten in Form von Objekten, beispielsweise in Form von CORBA-Objekten. Zur Übertragung der Objekte kann dann das durch die bereits erwähnte OMG definierte Internet InterObjectRequestBroker Protocol (IIOP) eingesetzt werden, das im Rahmen des TCP/IP übertragen werden kann (TCP/IP = Transmission Control Protocol / Internet Protocol).

Es ist einerseits möglich, dass der Diensterechner GPTM die von dem Datenendgerät TERA gesendeten Daten lediglich in Objekte umsetzt und von der Vermittlungsstelle SW1 gesendete Daten, beispielsweise Eingabeaufforderungen, aus Objekten in eine für das Datenendgerät TERA auswertbare Form umsetzt. Der Diensterechner GPTM ist in diesem Fall für die Werte der Daten transparent. Es ist andrerseits jedoch auch möglich, dass der Diensterechner GPTM die Telekommunikationsdienst-Daten bei einer Kommunikation mit dem Datenendgerät TERA zunächst in dem Speichermittel MEMSC ablegt und anschliessend Änderungen in den Telekommunikationsdienst-Daten der Vermittlungsstelle SW1 in Form von Objekten übermittelt. Weiterhin können die Telekommunikationsdienst-Daten sowie ähnliche Daten anderer Teilnehmeranschlüsse, beispielsweise eines über eine Teilnehmeranschlussleitung VB1 an die Vermittlungsstelle SW2 angeschlossenen Endgerätes TELB in dem Speichermittel MEMSC temporär oder dauerhaft abgelegt sein. Der Diensterechner GPTM erbringt dann die Benutzerschnittstellen-Funktion für mehrere Vermittlungsstellen und stellt zugleich eine gemeinsame Telekommunikationsdienst-Datenbasis und Funktionsbasis für diese Vermittlungsstellen dar. Ein Beispiel dafür ist in Figur 2 dargestellt.

Figur 2 zeigt im Wesentlichen die aus Figur 1 bekannte Anordnung, wobei jedoch das Datenendgerät TERA vereinfacht dargestellt ist, und das Endgerät TELB ganz entfällt. Weiterhin sind das Internet INT, die zu diesem gehörigen Elemente Gateway GW und Zugangseinrichtung POP sowie die entsprechenden Verbindungen VPOP und VIP dorthin aus Gründen der Übersichtlichkeit nicht mehr dargestellt. Dafür ist die Vermittlungsstelle SW2 detaillierter gezeigt. Die Vermittlungsstelle SW2 interagiert in Figur 2 nämlich ebenso wie die Vermittlungsstelle SW1 mit dem Diensterechner GPTM in erfindungsgemäßer Weise. In der Vermittlungsstelle SW2 leistet ein Steuermittel CPUS2 ähnliche Funktionen wie das Steuermittel CPUSW, ein Speichermittel MEMS2 ähnliche Funktionen wie das Speichermittel MEMSW, ein Verbindungsmittel TRS2 ähnliche Funktionen wie das Verbindungsmittel TRSW und eine Schnittstelleneinrichtung LPT2 ähnliche Funktionen wie die Schnittstelleneinrichtung LPTM. Anders als in Figur 1 ist die Vermittlungsstelle SW1 nicht über eine Ende-zu-Ende-Verbindung VGP mit dem Diensterechner GPTM verbunden, sondern sowohl die Vermittlungsstelle SW1 als auch die Vermittlungsstelle SW2 sind über ihre Schnittstelleneinrichtungen LPT2 bzw. LPTM an einen gemeinsamen Bus VGPBUS angeschlossen, über den die Vermittlungsstelle SW1 und die Vermittlungsstelle SW2 Telekommunikationsdienst-Daten in Form von Objekten zu dem über das Verbindungsmittel TRSC an den Bus VGPBUS angeschlossenen Diensterechner GPTM senden und von diesem empfangen können. Die einzelnen Stichleitungen der Vermittlungsstelle SW1, der Vermittlungsstelle SW2, des Diensterechners GPTM und eines Nameservers NS zu dem Bus VGPBUS sind in Figur 2 nicht näher bezeichnet. Der Bus VGPBUS kann sowohl ein tatsächlicher Bus sein, beispielsweise ein LAN (Local Area Network) oder ein WAN (Wide Area Network), als auch ein logischer Bus, der z.B. über das Internet oder über ein VPN auf dem Telekommunikationsnetz PSTN eingerichtet ist.

Bei dem Nameserver NS handelt es sich um einen Rechner, der zentral für die an den Bus VGPBUS angeschlossenen Netzelemente sogenannte Objektreferenzen speichert und verwaltet. Jedes neu an den Bus VGPBUS anzuschliessende Netzelement, also beispielsweise im Vergleich zu Figur 1 die Vermittlungsstelle SW2, meldet sich nach seinem Anschluss bei dem Nameserver NS an, das heisst, das Netzelement sendet dem Nameserver NS zumindest seine logische Bezeichnung, z.B. "SW2", sowie eine tatsächliche, physikalische Netzwerkadresse, z.B. eine Internet-Adresse. Wenn nun der Diensterechner GPTM ein Objekt mit Telekommunikationsdienst-Daten an die Vermittlungsstelle SW2 senden will, fragt der Diensterechner GPTM zunächst anhand der logischen Bezeichnung "SW2" bei dem Nameserver NS nach, unter welcher Objektreferenz die Vermittlungsstelle SW2 zu erreichen ist. Diese Objektreferenz enthält unter anderem die physikälische Netzwerkadresse der Vermittlungsstelle SW2, anhand derer der Diensterechner GPTM dann Objekte an die Vermittlungsstelle SW2 senden kann. Ebenso kann die Vermittlungsstelle SW2 in umgekehrter Richtung die Objektreferenz des Diensterechners GPTM bei dem Nameserver NS abfragen, wenn die Vermittlungsstelle SW2 Objekte an den Diensterechner GPTM senden will. Der zunehmenden Mobilität von Teilnehmern kann mit Hilfe der Erfindung auch dadurch Rechnung getragen werden, dass nicht nur die Objektreferenzen der Vermittlungsstellen SW1 und SW2, sondern auch Objektreferenzen der an diese angeschlossenen Teilnehmer in dem Nameserver NS abgelegt ist. Dann ist es beispielsweise nicht mehr notwendig, dass in dem Diensterechner GPTM vermerkt ist, ob der Teilnehmer SUBA gerade an die Vermittlungsstelle SW1 oder temporär an die Vermittlungsstelle SW2 angeschlossen ist. Durch die so erreichte Abstraktionsstufe sind einerseits die Telekommunikationsdienst-Daten in dem Diensterechner GPTM leicht zu verwalten, andrerseits kann die Software des Diensterechners GPTM zur Verwaltung und Nutzung der Telekommunikationsdienst-Daten einfacher und unabhängiger von der tatsächlich vorhanden Infrastruktur des Telekommunikationsnetzes PSTN erstellt werden.

Die Schnittstelleneinrichtung LPTM kann integraler Bestandteil der Vermittlungsstelle SW1 - auch in Form eines Rechnermodules - sein oder unmittelbar in das Diensterbringungsmittel SM integriert sein. Es ist jedoch auch möglich, dass die Schnittstelleneinrichtung LPTM ein der Vermittlungsstelle SW1 vorgelagerter Rechner ist, der z.B. durch ein UNIX-Betriebssystem betrieben wird und mit der Vermittlungsstelle SW1 beispielsweise über ein LAN Daten austauscht. Insbesondere wenn das Diensterbringungsmittel SM von der Schnittstelleneinrichtung LPTM getrennt ist, also ein modularer Aufbau gewählt ist, kann das Diensterbringungsmittel SM einerseits wie oben beschrieben in bekannter Weise von dem Endgerät TELA aus manipuliert werden, andrerseits auch sehr komfortabel über das Internet, den Diensterechner GPTM und die Schnittstelleneinrichtung LPTM von dem Datenendgerät TERA aus. Die Schnittstelleneinrichtung LPTM konvertiert dabei die von dem Diensterechner GPTM aufgerufenen Objekte in Kommandos, die von dem Diensterbringungsmittel SM interpretierbar sind und wandelt in umgekehrter Richtung Meldungen des Diensterbringungsmittels SM in Objekte. Das Diensterbringungsmittel SM muss dabei für die neuartige, erfindungsgemäße Kommunikation mit dem Diensterechner GPTM nicht modifiziert werden.

Weiterhin können mit Hilfe der Schnittstelleneinrichtung LPTM auch ohne Weiteres neuartige, über die bisherigen Funktionen des Diensterbringungsmittels SM hinausgehende Funktionen implementiert werden. Durch die Kommunikation in Objekten können nämlich nicht nur Daten zur Konfiguration von Telekommunikationsdiensten besonders komfortabel übertragen werden, sondern auch im Zusammenwirken der Vermittlungsstelle SW1 und des Diensterechners GPTM Telekommunikationsdienste erbracht werden. Ein solcher Dienst ist beispielsweise der sogenannte "Virtual Fax Service", bei dem das Telekommunikationsnetz PSTN z.B. anstelle eines Faxgerätes des Teilnehmers SUBA ein Fax entgegen nimmt, wenn dieser kein Faxgerät an die Teilnehmeranschlussleitung VA1 angeschlossen hat. Wenn die Vermittlungsstelle SW1 z.B. auf der Verbindung V12 eine für den Teilnehmer SUBA bestimmte Faxnachricht empfängt, so leitet das Verbindungsmittel TRSW die Faxnachricht an das Diensterbringungsmittel SM weiter, welches die Faxnachricht der Schnittstelleneinrichtung LPTM weiterreicht. Die Schnittstelleneinrichtung LPTM konvertiert dann die Faxnachricht in ein Objekt, das die Schnittstelleneinrichtung LPTM dem Diensterechner GPTM auf dem Bus VGPBUS sendet. Dieser speichert das Faxnachricht-Objekt in seinem Speichermittel MEMSC zum späteren Abruf durch den Teilnehmer SUBA. Es ist jedoch auch möglich, dass an den Diensterechner GPTM für die Erbringung solcher Dienste weitere Rechner angekoppelt sind.

In Figur 4 ist ein beispielhafter Ablauf einer Kommunikation zwischen der Vermittlungsstelle SW1 und dem Diensterechner GPTM in Kommunikationsschritten S41, S42, S43, S44, S45, S46, S47 und S48 dargestellt. Die Kommunikationsschritte S41, S45, S47 und S48 sind dick umrandet und mit abgerundeten Ecken dargestellt, um anzudeuten, dass bei diesen Kommunikationsschritten Daten in der Vermittlungsstelle SW1 manipuliert werden, während die Kommunikationsschritte S42, S43, S44 und S46 in dünneren Linien solche Kommunikationsschritte darstellen, bei dem der Diensterechner GPTM Daten bei der Vermittlungsstelle SW1 lediglich abfragt.

Wenn der Teilnehmer SUBA über sein Datenendgerät TERA auf die Benutzerschnittstelle des Diensterechners GPTM in der oben beschriebenen Weise zugreift, ruft der Diensterechner GPTM ein Objekt "ManageDNProfile" der Vermittlungsstelle SW1 ab, mit dem die Vermittlungsstelle SW1 dazu aufgefordert wird, für eine von dem Diensterechner GPTM angegebene Teilnehmernummer (DN = Directory Number) eine Zugriffssperre einzurichten, damit nicht während des nun folgenden Prozesses von anderer Stelle aus auf dieselben Teilnehmerdaten zugegriffen werden kann. In dem Kommunikationsschritt S42 fragt der Diensterechner GPTM dann ein Objekt "GetServiceList" bei der Vermittlungsstelle SW1 ab, in dem die für den Teilnehmer SUBA eingerichteten Telekommunikationsdienste angegeben werden. In einem optionalen Kommunikationsschritt S43 kann der Diensterechner GPTM über ein Objekt "GetAllMSNs" von der Vermittlungsstelle SW1 erfahren, welche zusätzlichen Rufnummern, sogenannte "Multiple Subscriber Numbers" (MSNs), für die Teilnehmeranschlussleitung VA1 eingerichtet sind, falls die Teilnehmeranschlussleitung VA1 eine ISDN-Teilnehmeranschlussleitung ist. In dem Kommunikationsschritt S44 erfährt der Diensterechner GPTM von der Vermittlungsstelle SW1 über ein Objekt "GetAccessType", ob die Teilnehmeranschlussleitung VA1 analog oder über ein ISDN-Protokoll, beispielsweise 1TR6 oder E-DSS1, bedient wird. Der Diensterechner GPTM könnte dabei auch erfahren, dass die Teilnehmeranschlussleitung VA1 ein Mobilfunk-Anschluss ist. In dem Kommunikationsschritt S45 richtet der Diensterechner GPTM dann über ein Objekt "SetServiceSubscription" einen neuen Telekommunikationsdienst bei der Vermittlungsstelle SW1 ein, wenn von dem Teilnehmer SUBA aus ein solcher angefordert wird. In dem Kommunikationsschritt S46 fragt der Diensterechner GPTM bei der Vermittlungsstelle SW1 mit einem Objekt "GetServiceDetails" ab, welche Parameter für den gegebenenfalls in dem Kommunikationsschritt S45 eingerichteten Telekommunikationsdienst oder einen anderen, bereits schon zuvor eingerichteten Telekommunikationsdienst ab. In dem Kommunikationsschritt S47 modifiziert der Diensterechner GPTM über ein Objekt "ModifyServiceDetails" die in dem Kommunikationsschritt S46 abgefragten Parameter, schaltet also beispielsweise eine Rufumleitung aktiv oder ändert die dafür angegebene Zielrufnummer nach den Angaben des Teilnehmers SUBA an dem Datenendgerät TERA. In einem Kommunikationsschritt S48 schliesslich stellt der Diensterechner GPTM mit einem Objekt "ManageINTrigger" einen sogenannten Triggerpunkt in der Vermittlungsstelle SW1 ein. Durch einen solchen Triggerpunkt kann die Vermittlungsstelle SW1 dazu veranlasst werden, bei einem für die Teilnehmeranschlussleitung ankommenden Ruf, während diese beispielsweise wegen einer Internet-Sitzung des Datenendgerätes TERA belegt ist, den Diensterechner GPTM oder einen Diensterechner eines Intelligenten Netzes (IN), einen sogenannten SCP (Service Control Point) zur Erbringung eines Telekommunikationsdienstes aufzufordern. Dann sendet der Diensterechner z.B. eine Nachricht über das Internet an das Datenendgerät TERA, dass ein Ruf für den Teilnehmer SUBA bereitsteht.

Der Diensterechner GPTM kann seine oben beschriebenen erfindungsgemäßen Funktionen auch mit Hilfe eines Programm-Moduls erbringen, das in dem Speichermittel MEMSC abgelegt ist und von dem Steuermittel CPUSC ausgeführt werden kann. Entsprechend der Instruktionen des Programm-Moduls steuert der Diensterechner GPTM dann unter anderem die Funktionen des Verbindungsmittels TRSC, das beispielsweise ein sogenannter "Socket" eines den Diensterechner GPTM betreibenden UNIX-Betriebssystemes sein kann. Es ist auch möglich, dass der Diensterechner GPTM mit der Vermittlungsstelle SW1 und mit der Vermittlungsstelle SW2 über jeweils unterschiedlich aufgebaute Objekte oder über Objekte mit einem unterschiedlichen Leistungsumfang kommuniziert. Der Diensterechner GPTM kann auch in die Vermittlungsstelle SW1 integriert sein. Das Speichermittel MEMSW erfüllt dann zusätzlich die Funktionen des Speichermittels MEMSC, das Steuermittel CPUSW erfüllt die Funktionen des Steuermittels CPUSC und das Verbindungsmittel TRSW die Funktionen des Verbindungsmittels TRSC.

## Patentansprüche

1. Verfahren zur Übermittlung von Telekommunikationsdienst-Daten zwischen einer Vermittlungsstelle (SW1) und einem Diensterechner (GPTM), wobei ein Teilnehmer (SUBA) mit einem Datenendgerät (TERA) über das Internet auf eine Benutzerschnittstelle (IGP) des Diensterechners (GPTM) zugreifen kann, wobei der Teilnehmer über die Benutzerschnittstelle (IGP) Telekommunikationsdienst-Daten manipulieren kann und wobei die Vermittlungsstelle (SW1) mit Hilfe der Telekommunikationsdienst-Daten Telekommunikationsdienste erbringen kann, **dadurch gekennzeichnet,** dass eine Verbindung (VGP) zwischen der Vermittlungsstelle (SW1) und dem Diensterechner (GPTM) aufgebaut wird, und dass auf der Verbindung zwischen der Vermittlungsstelle (SW1) und dem Diensterechner (GPTM) Daten zur Erbringung von Telekommunikationsdiensten für den Teilnehmer in Form von Objekten übermittelt werden.

2. Verfahren nach Anspruch 1, dadurch gekennzeichnet, dass die Objekte zwischen der Vermittlungsstelle und dem Diensterechner als Object-Request-Broker-Objekte übermittelt werden.

3. Verfahren nach Anspruch 1, dadurch gekennzeichnet, dass für die Verbindung (VGP) mit dem Diensterechner (GPTM) ein Schnittstellenmodul (LPTM) eingesetzt wird, das einem Diensterbringungsmodul (SM) der Vermittlungsstelle (SW1) vorgeschaltet ist, dessen Daten zur Erbringung von Telekommunikationsdiensten auch über eine Telefonverbindung von dem Teilnehmer manipulierbar sind.

4. Verfahren nach Anspruch 1, dadurch gekennzeichnet, dass der Diensterechner (GPTM) die Objektreferenz der Vermittlungsstelle (SW1) oder dass die Vermittlungsstelle (SW1) die Objektreferenz des Diensterechners (GPTM) mit Hilfe eines Nameservers ermittelt, und dass die Objekte zwischen der Vermittlungsstelle (SW1) und dem Diensterechner (GPTM) mit Hilfe der jeweiligen Objektreferenz übermittelt werden.

5. Verfahren nach Anspruch 1, dadurch gekennzeichnet, dass der Diensterechner (GPTM) der Vermittlungsstelle (SW1) als Daten zur Erbringung von Telekommunikationsdiensten Konfigurationseinstellungen für Telekommunikationsdienste übermittelt.

6. Verfahren nach Anspruch 1, dadurch gekennzeichnet, dass der Diensterechner (GPTM) und die Vermittlungsstelle (SW1) als Daten zur Erbringung von Telekommunikationsdiensten solche Daten übermitteln, mit denen die Vermittlungsstelle (SW1) und der Diensterechner (GPTM) interaktiv Telekommunikationsdienste erbringen können.

7. Diensterechner (GPTM) zur Übermittlung von Telekommunikationsdienst-Daten zwischen einer Vermittlungsstelle (SW1) und dem Diensterechner (GPTM), wobei der Diensterechner (GPTM) eine Benutzerschnittstelle (IGP) aufweist, auf die ein Teilnehmer (SUBA) mit einem Datenengerät (TERA) über das Internet zugreifen kann und über die der Teilnehmer Telekommunikationsdienst-Daten manipulieren kann, mit Hilfe derer die Vermittlungsstelle (SW1) Telekommunikationsdienste erbringen kann, **dadurch gekennzeichnet, dass** der Diensterechner (GPTM) Speichermittel (MEMSC) aufweist, die derart ausgestaltet sind, dass der Diensterechner (GPTM) die Telekommunikationsdienst-Daten speichern kann, dass der Diensterechner (GPTM) Verbindungsmittel (TRSC) aufweist, die derart ausgestaltet sind, dass der Diensterechner (GPTM) eine Verbindung (VGP) zu der Vermittlungsstelle (SW1) aufbauen kann und dass die Verbindungsmittel (TRSC) weiterhin derart ausgestaltet sind, dass der Diensterechner (GPTM) auf der Verbindung zu der Vermittlungsstelle (SW1) Daten zur Erbringung von Telekommunikationsdiensten für den Teilnehmer in Form von Objekten übermitteln kann.

8. Programm-Modul für einen Diensterechner (GPTM) zur Übermittlung von Telekommunikationsdienst-Daten zwischen einer Vermittlungsstelle (SW1) und dem Diensterechner (GPTM), welcher eine Benutzerschnittstelle (IGP) aufweist, auf die ein Teilnehmer (SUBA) mit einem Datenengerät (TERA) über das Internet zugreifen kann und über die der Teilnehmer Telekommunikationsdienst-Daten manipulieren kann, mit Hilfe derer die Vermittlungsstelle (SW1) Telekommunikationsdienste erbringen kann, wobei das Programm-Modul Programmcode enthält, der von einem Steuermittel (CPUSC) des Diensterechners (GPTM) ausgeführt werden kann, dadurch **gekennzeichnet, dass** das Programm-Modul derart ausgestaltet sind, dass der Diensterechner (GPTM) nach den Anweisungen des Programm-Moduls die Telekommunikationsdienst-Daten in einem Speichermittel (MEMSC) speichern kann, dass das Programm-Modul Verbindungsmittel aufweist, die derart ausgestaltet sind, dass der Diensterechner (GPTM) nach den Anweisungen des Programm-Moduls eine Verbindung (VGP) zu der Vermittlungsstelle (SW1) aufbauen kann und dass die Verbindungsmittel weiterhin derart ausgestaltet sind, dass der Diensterechner (GPTM) nach den Anweisungen des Programm-Moduls auf der Verbindung zu der Vermittlungsstelle (SW1) Daten zur Erbringung von Telekommunikationsdiensten für den Teilnehmer in Form von Objekten übermitteln kann.

9. Schnittstelleneinrichtung (LPTM) für eine Vermittlungsstelle (SW1) zur Übermittlung von Telekommunikationsdienst-Daten zwischen der Vermittlungsstelle (SW1) und einem Diensterechner (GPTM), welcher eine Benutzerschnittstelle (IGP) aufweist, auf die ein Teilnehmer (SUBA) mit einem Datenengerät (TERA) über das Internet zugreifen kann und über die der Teilnehmer Telekommunikationsdienst-Daten manipulieren kann, die zur Erbringung von Telekommunikationsdiensten durch ein Diensterbringungsmittel (SM) der Vermittlungsstelle (SW1) eingesetzt werden können, **dadurch gekennzeichnet, dass** die Schnittstelleneinrichtung (LPTM) Verbindungsmittel aufweist, die derart ausgestaltet sind, dass die Schnittstelleneinrichtung (LPTM) oder der Diensterechner (GPTM) eine Verbindung (VGP) zwischen der Vermittlungsstelle (SW1) und dem Diensterechner (GPTM) aufbauen kann und dass die Schnittstelleneinrichtung (LPTM) Sende- und Empfangsmittel aufweist, die derart ausgestaltet sind, dass die Schnittstelleneinrichtung (LPTM) auf der Verbindung zwischen der Vermittlungsstelle (SW1) und dem Diensterechner (GPTM) Daten zur Erbringung von Telekommunikationsdiensten für den Teilnehmer durch die Vermittlungsstelle (SW1) in Form von Objekten übermitteln kann.

10. Vermittlungsstelle mit einer Schnittstelleneinrichtung (LPTM) zur Übermittlung von Telekommunikationsdienst-Daten zwischen der Vermittlungsstelle (SW1) und einem Diensterechner (GPTM), welcher eine Benutzerschnittstelle (IGP) aufweist, auf die ein Teilnehmer (SUBA) mit einem Datenengerät (TERA) über das Internet zugreifen kann und über die der Teilnehmer Telekommunikationsdienst-Daten manipulieren kann, die zur Erbringung von Telekommunikationsdiensten durch ein Diensterbringungsmittel (SM) der Vermittlungsstelle (SW1) eingesetzt werden können, **dadurch gekennzeichnet, dass** die Schnittstelleneinrichtung (LPTM) Verbindungsmittel aufweist, die derart ausgestaltet sind, dass die Schnittstelleneinrichtung (LPTM) oder der Diensterechner (GPTM) eine Verbindung (VGP) zwischen der Vermittlungsstelle (SW1) und dem Diensterechner (GPTM) aufbauen kann und dass die Schnittstelleneinrichtung (LPTM) Sende- und Empfangsmittel aufweist, die derart ausgestaltet sind, dass die Schnittstelleneinrichtung (LPTM) auf der Verbindung zwischen der Vermittlungsstelle (SW1) und dem Diensterechner (GPTM) Daten zur Erbringung von Telekommunikationsdiensten für den Teilnehmer durch die Vermittlungsstelle (SW1) in Form von Objekten übermitteln kann.
